# EUROPÄISCHE PATENTSCHRIFT

(11) **EP 0 488 449 B1**
(45) Veröffentlichungstag und Bekanntmachung des Hinweises auf die Patenterteilung: **28.09.1994**
(21) Anmeldenummer: 91203020.2
(22) Anmeldetag: 20.11.1991
(51) Int. Cl.: B05B 15/12

(54) **Verfahren und Vorrichtung zur Aufbereitung von Lack-Koagulat**
Method and apparatus for treating the lacquer coagulate
Procédé et appareillage pour le traitement du coagulat de peinture

(30) Priorität: 27.11.1990 DE 4037718
(43) Veröffentlichungstag der Anmeldung: 03.06.1992
(73) Patentinhaber: ENVILACK GmbH, D-47138 Duisburg (DE); DAIMLER-BENZ AKTIENGESELLSCHAFT, 70567 Stuttgart (DE); LÖSCH UMWELTSCHUTZ AG, 12355 Berlin (DE)
(72) Erfinder: Berewinkel, Karl-Heinz, W-4047 Dormagen 1 (DE); Kraus, Reinhard, W-7038 Holzgerlingen (DE)

(56) Entgegenhaltungen:
- WO-A-86/06657
- DE-A- 3 802 851

## Beschreibung

Die Erfindung betrifft ein verfahren und eine Vorrichtung zur Aufbereitung von bei der Spritzverarbeitung von Lacken anfallendem, Wasser, Lösungsmittel, Pigmente/Füllstoff, Bindemittel und Koagulierungsmittel enthaltendem Koagulat, das mit Lösemittel verrührt wird.

Bei der Spritzverarbeitung von Lacken entsteht sogenanntes Overspray, das von der Spritzkabinenluft aufgenommen, aus dieser mit im Kreislauf geführtem Wasser ausgewaschen wird und unter Zusatz von Koagulierungsmittel als Lack-Koagulat sedimentiert oder aufschwimmt. Bei der heute u.a. üblichen Verwendung von Koagulierungsmitteln aus pulverförmigen Tonmineralien auf oxidischer oder silikatischer Basis enthält das Koagulat in der Regel zu über 50 % Wasser und bis zu 50 % Lack. Da sich aus dem Koagulat das Wasser nicht auskneten und der Lack bzw. dessen Komponenten nicht ohne weiteres auswaschen lassen, ist es derzeit üblich, die anfallenden Koagulate entweder zu deponieren oder geeigneten Verbrennungsanlagen zuzuführen.

In der WO-A-8 606 657 ist ein Verfahren zur Zurückgewinnung von Wertstoffen aus Lackschlamm beschrieben, bei dem dem Lackschlamm bis zu 50 Vol.% Lösungsmittel zugegeben werden und/oder Lackschlamm bis zu 60 % erwärmt wird. Der Feststoffgehalt des verflüssigten Lackschlammes wird durch eine Behandlung in einer Dekantierzentrifuge und dann in einem Zentrifugalbeschleuniger auf weniger als 3 % abgesenkt. Die DE-C 38 02 857 beschreibt ein Verfahren zur Rückgewinnung von Lacken und Lackfarben aus Umlaufwasser von Lackieranlagen, wobei der Lack bzw. die Lackfarbe, der mit dem Umlaufwasser ein Gemisch mit bis zu 50 % Wassergehalt bildet und die im Gemisch enthaltenen Wassereinschlüsse in einem Turbulenzmischer aufgeschlossen und aus dem Mischraum entfernt werden.

Aufgabe der vorliegenden Erfindung ist es, ein Verfahren und eine Vorrichtung bereitzustellen, mit deren Hilfe die einzelnen Komponenten der Koagulate weitgehend in den Wirtschafts- und Materialkreislauf rückführbar sind, um Erstrohstoffe und Energie zu sparen und die Umwelteinwirkung durch die bei der Verbrennung der Koagulate anfallenden Produkte zu vermeiden.

Die Lösung dieser Aufgabe besteht darin, daß das Koagulat mit Lösemittel verrührt, diese Suspension in geklärte, im wesentlichen aus gelöstem Bindemittel und Restwasser bestehende Suspensionsflüssigkeit und Rückstand getrennt, die Suspensionsflüssigkeit filtriert und/oder zentrifugiert und durch Verdampfen unter Vakuum aufkonzentriert, der dabei entstandene, aus Sattdampf von Lösungsmittel und Restwasser bestehende Brüden in Kondensat überführt, der überwiegende Teil der im Rückstand eingeschlossenen Suspensionsflüssigkeit abgetrennt, das Kondensat und die von dem Rückstand abgetrennte Suspensionsflüssigkeit in Lösemittel und Wasser getrennt und das Lösemittel in den Kreislauf zurückgeführt wird.

Die Lösung der vorstehend angeführten Aufgabe kann auch in der Weise erfolgen, daß das Koagulat getrocknet, der aus Sattdampf von Lösungsmittel und Wasser bestehende Brüden in Kondensat überführt und das Kondensat in Lösemittel und Wasser getrennt, das getrocknete Koagulat mit Lösemittel verrührt, diese Suspension in geklärte, im wesentlichen aus gelöstem Bindemittel bestehende Suspensionsflüssigkeit und Rückstand getrennt, die Suspensionsflüssigkeit filtriert und/oder zentrifugiert und durch Verdampfen unter Vakuum aufkonzentriert, der dabei entstandene aus Sattdampf von Lösemittel bestehende Brüden in Kondensat überführt, der überwiegende Teil der im Rückstand eingeschlossenen Suspensionsflüssigkeit abgetrennt und das Lösemittel in den Kreislauf zurückgeführt wird. Dabei wird das Lack-Koagulat bei einer Temperatur von 35 bis 70°C unter einem Vakuum von 5 bis 50 mbar, vorzugsweise 10 bis 15 mbar, getrocknet.

Im Rahmen der vorzugsweisen Ausgestaltung erfolgt die Verdampfung der geklärten Suspensionsflüssigkeit unter Vakuum bei einer Temperatur im Bereich von 35 bis 70°C und bei einem Unterdruck von 5 bis 50 mbar, vorzugsweise 10 bis 15 mbar.

Nachdem der größere Teil der im Rückstand eingeschlossenen Suspensionsflüssigkeit entfernt ist, kann nach einem weiteren Erfindungsmerkmal der Rückstand bei einer Temperatur von 80 bis 200°C getrocknet und anschließend insbesondere durch Mahlen zerkleinert werden. Der bei der Trocknung anfallende, aus Sattdampf von Lösemittel und Wasser oder nur Lösemittel bestehende Brüden wird in Kondensat überführt. Das Lösemittel-Wasser-Kondensat wird in Lösemittel und Wasser getrennt.

Bedingt durch die Konsistenz der eingesetzten Koagulate werden diese mit Lösemittel im Verhältnis 1:0,5 bis 1:5, vorzugsweise 1:1 bis 1:2, vermischt.

Den Koagulaten wird übliches Lösemittel, vorzugsweise jedoch aromatische Kohlenwasserstoffe, Ester, Glykoläther und Alkohole einzeln oder zu mehreren gemischt, zugesetzt.

Das erfindungsgemäße Verfahren ist besonders geeignet für die Behandlung von Koagulaten der Zusammensetzung 10 bis 60 % Wasser, 5 bis 10 % Lösemittel, 15 bis 40 % Pigmente/Füllstoff, 10 bis 50 % Bindemittel und > 0 bis 20 %, vorzugsweise 5 bis 20 %, Koagulierungsmittel.

Die bei der Vakuumverdampfung der Suspensionsflüssigkeit anfallende Bindemittellösung kann als Basis für die Herstellung von Lacken, Formpreßteilen etc. benutzt werden.

Der vollständig getrocknete, aus Pigmenten/Füllstoff und Koagulationsmittel bestehende Rückstand wird vorzugsweise durch Mahlen zerkleinert und kann als Füllstoff beispielsweise bei der Herstellung von Dämmatten, Schwerschichtfolien, Unterbodenschutzmaterialien etc. eingesetzt werden.

Die Vorrichtung zur Durchführung des Verfahrens besteht aus einem Dissolver zum Verrühren des Koagulats mit Lösemittel, einem Sedimentationsbehälter zur Trennung in Suspensionsflüssigkeit und Rückstand, einer Filter- und/oder Zentrifugeneinheit zum Abtrennen von in der geklärten Suspensionsflüssigkeit enthaltenen Restpigmenten/Restfüllstoff, einem Vakuumverdampfer zum Aufkonzentrieren des gelösten Bindemittels, einem Kondensator zur Überführung des Brüdens des Vakuumverdampfers in Kondensat, einer Dekantiereinrichtung zur Entfernung von Suspensionsflüssigkeit aus dem Rückstand, einem Behälter zur Aufnahme und Trennung des Kondensats und der aus dem Rückstand entfernten Suspensionsflüssigkeit in Lösemittel und Wasser.

Bei einer abgewandelten Ausführungsform der Vorrichtung ist zunächst ein Vakuumtrockner zur Trocknung des Koagulats mit nachgeordnetem Kondensator zur Überführung des das Lösungsmittel und Wasser in Sattdampfform enthaltenden Brüdens in Kondensat, ein Behälter zur Aufnahme und Trennung des Kondensats in Lösemittel und Wasser, ein Dissolver zum Verrühren des trockenen Koagulats mit Lösemittel, ein Sedimentationsbehälter zur Trennung von Suspensionsflüssigkeit und Rückstand, eine Filter- und/oder Zentrifugeneinheit zum Abtrennen von in der Suspensionsflüssigkeit enthaltenen Restpigmenten/Restfüllstoff, ein Vakuumverdampfer zum Aufkonzentrieren des gelösten Bindemittels, ein Kondensator zur Überführung des Brüdens des Vakuumverdampfers in Kondensat, eine Dekantiereinrichtung zur Entfernung von im Rückstand eingeschlossener Suspensionsflüssigkeit und ein Behälter zur Aufnahme und Trennung des bei der Trocknung des Lack-Koagulats gebildeten Kondensats in Lösemittel und Wasser vorgesehen. Der Ausgang des mit dem Vakuumverdampfer verbundenen Kondensators und der Ausgang der Dekantiereinrichtung stehen ebenfalls mit dem das Lösemittel-Wasser-Kondensat aufnehmenden Behälter in Verbindung.

Der Dekantiereinrichtung ist ein Trockner für die Trocknung des Rückstands mit Kondensator zur Überführung des Trocknerbrüdens in Kondensat nachgeordnet, wobei dessen Ausgang ebenfalls mit dem Behälter zur Aufnahme des Lösemittel-Wasser-Kondensats in Verbindung steht. Der trockene Rückstand wird in einer Mühle zerkleinert.

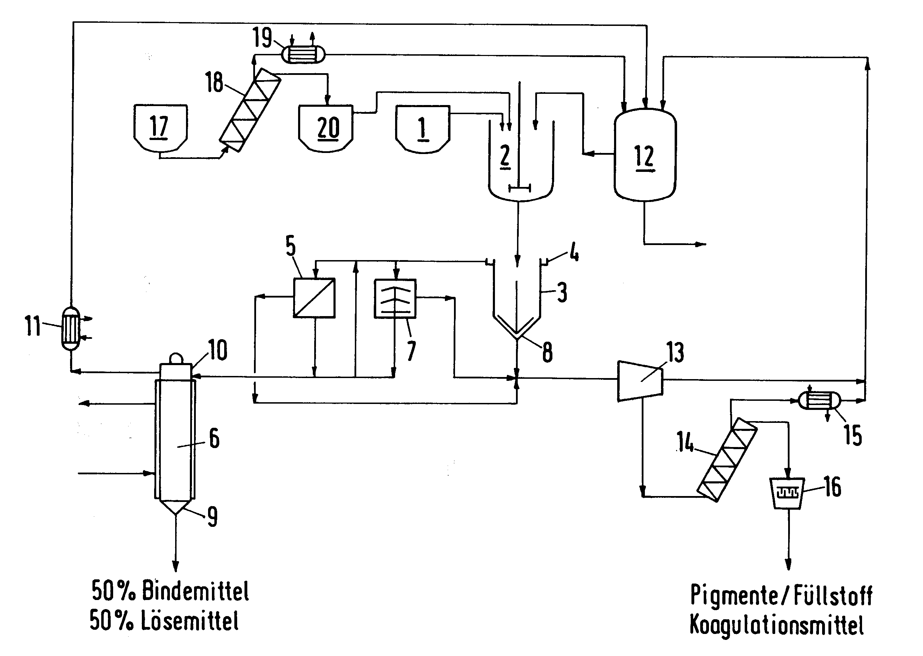

Die Erfindung ist im folgenden näher und beispielhaft durch ein in der Zeichnung dargestelltes Fließbild des erfindungsgemäßen Verfahrens erläutert.

Das in dem Behälter (1) enthaltene Koagulat der Zusammensetzung 45 % Wasser, 5 % Lösemittel, 17 % Pigmente/Füllstoff, 17 % Bindemittel, 16 % Tonerde (Bentonit) wird im Verhältnis 1:1 mit einem Lösemittelgemisch aus Xylol/Butylacetat in dem Dissolver (2) verrührt und anschließend einem Eindicker (3) aufgegeben. Die geklärte Suspensionsflüssigkeit verläßt über die am Rand umlaufende Rinne (4) den Eindicker (3) und wird über den Membranfilter (5) einem Dünnschichtverdampfer (6) aufgegeben.

Es ist auch möglich, die Suspensionsflüssigkeit über eine Zentrifuge (7) in den Dünnschichtverdampfer (6) eintreten zu lassen.

Eine andere Möglichkeit ist darin zu sehen, daß die Suspensionsflüssigkeit erst über die Zentrifuge (7) und dann über den Membranfilter (5) geführt und dann dem Dünnschichtverdampfer (6) aufgegeben wird.

Die aus dem Membranfilter (5) und/oder der Zentrifuge (7) ausgetragenen Restpigmente/Restfüllstoff werden dem aus der Bodenöffnung (8) des Eindickers (3) austretenden Rückstand zugegeben.

Über den Austritt (9) des Dünnschichtverdampfers (6) tritt das gelöste Bindemittel aus. Der am Kopf (10) des Dünnschichtverdampfers (6) austretende, aus Sattdampf von Lösemittel und Wasser bestehende Brüden wird in dem Kondensator (11) kondensiert, das Kondensat dem Wasserabscheider (12) zugeleitet und in diesem in Lösemittel und Wasser getrennt. Aus dem Wasserabscheider (12) wird das Lösemittel entweder direkt dem Dissolver (2) oder einem Lösemittelvorratsbehälter zugeleitet.

Aus dem aus der Bodenöffnung (8) des Sedimentationsbehälters (3) austretenden Rückstand wird in einem Dekanter (13) der größte Teil der darin eingeschlossenen Suspensionsflüssigkeit entfernt und die Suspensionsflüssigkeit in dem Wasserabscheider (12) in Lösemittel und Wasser getrennt.

Der Rückstand des Dekanters (13) wird in einem Schneckentrockner (14) getrocknet, wobei der aus diesem austretende, aus Sattdampf von Lösemittel und Wasser bestehende Brüden in dem Kondensator (15) kondensiert und das Kondensat dem Wasserabscheider (12) zugeführt wird. Der aus Pigmenten/Füllstoff und Koagulationsmittel bestehende Austrag des Trockners (14) wird in einer Mühle (16) zu Pulver vermahlen.

Eine Variante der vorstehend beschriebenen Vorrichtung ist darin zu sehen, daß das in dem Behälter (17) befindliche Lack-Koagulat in einem Vakuumschneckentrockner (18) vollständig getrocknet und der das Lösungsmittel und das Wasser in Sattdampfform enthaltende Brüden in dem Kondensator (19) kondensiert und das Kondensat zur Trennung in Lösemittel und Wasser dem Wasserabscheider (12) zugeführt wird. Der Austrag des Vakuumtrockners (18) erfolgt in den Behälter (20), von wo aus das getrocknete Koagulat dem Dissolver (2) aufgegeben wird. Die bei dieser Vorrichtung aus den Kondensatoren (11) und (15) austretenden Kondensate sowie die aus dem Dekanter (13) austretende Suspensionsflüssigkeit und ggf. das den mit dem Trockner (14) verbundenen Kondensator (15) verlassende Kondensat, die jeweils nur aus Lösemittel bestehen, werden dem Wasserabscheider (12) zugeführt. Prinzipiell ist es auch möglich, das Lösemittel direkt in den Dissolver (2) einzuleiten.

Die mit der Erfindung erzielten Vorteile bestehen insbesondere darin, daß der Bindemittel- und Lösemittelanteil von Lack-Koagulaten vollständig in den Materialkreislauf zurückführbar ist und der Feststoffanteil als Füllstoff vollständig verwertet werden kann.

## Patentansprüche

1. Verfahren zur Aufbereitung von bei der Spritzverarbeitung von Lacken anfallendem, Wasser, Lösemittel, Pigmente/Füllstoff, Bindemittel und Koagulierungsmittel enthaltendem Koagulat, das mit Lösemittel verrührt wird, dadurch gekennzeichnet, daß diese Suspension in geklärte, im wesentlichen aus gelöstem Bindemittel und Restwasser bestehende Suspensionsflüssigkeit und Rückstand getrennt, die Suspensionsflüssigkeit filtriert und/oder zentrifugiert, durch Verdampfen unter Vakuum aufkonzentriert, der dabei entstandene, aus Sattdampf von Lösungsmittel und Restwasser bestehende Brüden in Kondensat überführt, der überwiegende Teil der im Rückstand eingeschlossenen Suspensionsflüssigkeit abgetrennt, das Kondensat und die vom Rückstand abgetrennte Suspensionsflüssigkeit in Lösemittel und Wasser getrennt und das Lösemittel in den Kreislauf zurückgeführt wird.

2. Verfahren zur Aufbereitung von bei der Spritzverarbeitung von Lacken anfallendem, Wasser, Lösemittel, Pigmente/Füllstoff, Bindemittel und Koagulierungsmittel enthaltendem Koagulat, dadurch gekennzeichnet, daß das Koagulat getrocknet, der aus Sattdampf von Lösungsmittel und Wasser bestehende Brüden in Kondensat überführt und das Kondensat in Lösemittel und Wasser getrennt, das getrocknete Koagulat mit Lösemittel verrührt, diese Suspension in geklärte, im wesentlichen aus gelöstem Bindemittel bestehende Suspensionsflüssigkeit und Rückstand getrennt die Suspensionsflüssigkeit filtriert und/oder zentrifugiert durch Verdampfen unter Vakuum aufkonzentriert und der dabei entstandene, aus Sattdampf von Lösungsmittel bestehende Brüden in Kondensat überführt, der überwiegende Teil der im Rückstand eingeschlossenen Suspensionsflüssigkeit abgetrennt und das Lösemittel in den Kreislauf zurückgeführt wird.

3. Verfahren nach Anspruch 1 oder 2, dadurch gekennzeichnet, daß die geklärte Suspensionsflüssigkeit bei einer Temperatur von 35 bis 70°C unter einem Vakuum von 5 bis 50 mbar, vorzugsweise 10 bis 15 mbar, aufkonzentriert wird.

4. Verfahren nach Anspruch 1 oder 2, dadurch gekennzeichnet, daß der Rückstand nach Entfernen der Suspensionsflüssigkeit bei einer Temperatur von 80 bis 200°C getrocknet und der aus Sattdampf von Lösemittel und Wasser oder nur Lösemittel bestehende Brüden in Kondensat überführt und das Lösemittel-Wasser-Kondensat in Lösemittel und Wasser getrennt wird.

5. Verfahren nach Anspruch 4, dadurch gekennzeichnet, daß der getrocknete Rückstand vorzugsweise durch Mahlen zerkleinert wird.

6. Verfahren nach Anspruch 2, dadurch gekennzeichnet, daß das Koagulat bei einer Temperatur von 35 bis 70°C unter einem Vakuum von 5 bis 50 mbar, vorzugsweise 10 bis 15 mbar, getrocknet wird.

7. Verfahren nach einem der Ansprüche 1 bis 6, dadurch gekennzeichnet, daß dem Koagulat Lösemittel im Verhältnis 1:0,5 bis 1:5, vorzugsweise 1:1 bis 1:2, zugemischt wird.

8. Verfahren nach einem der Ansprüche 1 bis 7, dadurch gekennzeichnet, daß dem Koagulat übliches Lösemittel, vorzugsweise aromatische Kohlenwasserstoffe, Ester Glykoläther und Alkohole einzeln oder zu mehreren gemischt, zugesetzt wird.

9. Verfahren nach einem der Ansprüche 1 bis 8, gekennzeichnet durch die Anwendung für Koagulate der Zusammensetzung 5 bis 60 % Wasser, 5 bis 10 % Lösemittel, 15 bis 40 % Pigmente/Füllstoff, 10 bis 50 % Bindemittel und > 0 bis 20 %, vorzugsweise 5 bis 20 %, Koagulationsmittel.

10. Vorrichtung zur Durchführung des Verfahrens nach einem der Ansprüche 1 bis 9, gekennzeichnet durch einen Dissolver (2) zum Verrühren des Koagulats mit Lösemittel, einen Sedimentationsbehälter (3) zur Trennung in Suspensionsflüssigkeit und Rückstand, eine Filter- (5) und/oder Zentrifugeneinheit (7) zum Abtrennen von Restpigmenten/Restfüllstoff aus der geklärten Suspensionsflüssigkeit, einen Vakuumverdampfer (6) zum Aufkonzentrieren des gelösten Bindemittels, einen Kondensator (11) zur Überführung des Brüdens des Vakuumverdampfers (6) in Kondensat, eine Dekantiereinrichtung (13) zum Entfernen von im Rückstand eingeschlossener Suspensionsflüssigkeit, einen Behälter (12) zur Aufnahme und Trennung des aus Lösemittel und Wasser bestehenden Kondensats sowie der aus dem Rückstand entfernten Suspensionsflüssigkeit in Lösemittel und Wasser.

11. Vorrichtung zur Durchführung des Verfahrens nach einem der Ansprüche 2 bis 9, gekennzeichnet durch einen Vakuumtrockner (18) zur Trocknung des Koagulats mit einem Kondensator (10) zur Überführung des Brüdens in Kondensat, einen Behälter (12) zur Aufnahme und Trennung dieses Kondensats in Lösemittel und Wasser, einen Dissolver (2) zum Verrühren des trockenen Koagulats mit Lösemittel, einen Sedimentationsbehälter (3) zur Trennung in Suspensionsflüssigkeit und Rückstand, eine Filter- (5) und/oder Zentrifugeneinheit (7) zum Abtrennen von Restpigmenten/Restfüllstoff aus der Suspensionsflüssigkeit, einen Vakuumverdampfer (6) zum Aufkonzentrieren des gelösten Bindemittels, einen Kondensator (11) zur Überführung des Brüdens des Vakuumverdampfers (6) in Kondensat und eine Dekantiereinrichtung (13) zur Entfernung von im Rückstand eingeschlossener Suspensionsflüssigkeit.

12. Vorrichtung nach Anspruch 11, dadurch gekennzeichnet, daß der Ausgang des mit dem Vakuumverdampfer (6) verbundenen Kondensators (11) und der Ausgang der Dekantiereinrichtung (13) mit dem das Lösemittel-Wasser-Kondensat aufnehmenden Behälter (12) in Verbindung stehen.

13. Vorrichtung nach einem der Ansprüche 10 bis 12, gekennzeichnet durch einen der Dekantiereinrichtung (13) nachgeordneten Trockner (14) für die Trocknung des Rückstands, der mit einem Kondensator (15) zur Überführung des Trocknerbrüdens in Kondensat und einer Mühle (16) zum Zerkleinern des getrockneten Rückstandes verbunden ist.

14. Vorrichtung nach Anspruch 13, dadurch gekennzeichnet, daß der Ausgang des mit dem Trockner (14) verbundenen Kondensators (15) mit dem das Lösemittel-Wasser-Kondensat aufnehmenden Behälter (12) in Verbindung steht.

## Claims

1. A process for working up coagulated material arising in the spray-processing of lacquers and containing water, solvent, pigments/filler, vehicles and coagulants, which is mixed with solvent by stirring, characterised in that this suspension is separated into a clarified suspension liquid, which substantially consists of dissolved vehicle and residual water, and a residue, the suspension liquid is filtered and/or centrifuged, concentrated by evaporation under vacuum, the vapour which is formed thereby and which consists of saturated vapour of solvent and residual water is converted into condensate, the predominant part of the suspension liquid contained in the residue is separated off, the condensate and the suspension liquid separated from the residue are separated into solvent and water, and the solvent is fed back to the circuit.

2. A process for working up coagulated material arising in the spray-processing of lacquers and containing water, solvent, pigments/filler, vehicles and coagulants, characterised in that the coagulated material is dried, the vapour consisting of saturated vapour of solvent and water is converted into condensate and the condensate is separated into solvent and water, the dried coagulated material is mixed with solvent by stirring, this suspension is separated into a clarified suspension liquid, which substantially consists of dissolved vehicle, and a residue, the suspension liquid is filtered and/or centrifuged, concentrated by evaporation under vacuum, the vapour which is formed thereby and which consists of saturated vapour of solvent and residual water is converted into condensate, the predominant part of the suspension liquid contained in the residue is separated off, and the solvent is fed back to the circuit.

3. A process according to claim 1 or 2, characterised in that the clarified suspension liquid is concentrated at a temperature of 35 to 70°C under a vacuum of 5 to 50 mbar, preferably 10 to 15 mbar.

4. A process according to claim 1 or 2, characterised in that after removing the suspension liquid the residue is dried at a temperature of 80 to 200°C and the vapour consisting of saturated vapour of solvent and water is converted into condensate and the solvent-water condensate is separated into solvent and water.

5. A process according to claim 4, characterised in that the dried residue is comminuted, preferably by milling.

6. A process according to claim 2, characterised in that the coagulated material is dried at a temperature of 35 to 70°C under a vacuum of 5 to 50 mbar, preferably 10 to 15 mbar.

7. A process according to any one of claims 1 to 6, characterised in that solvent is admixed with the coagulated material in the ratio of 1:0.5 to 1:5, preferably 1:1 to 1:2.

8. A process according to any one of claims 1 to 7, characterised in that a customary solvent, preferably aromatic hydrocarbons, esters, glycol ethers and alcohols, is added, individually or variously mixed, to the coagulated material.

9. A process according to any one of claims 1 to 8, characterised by its application to coagulated materials of composition 5 to 60 % water, 5 to 10 % solvent, 15 to 40 % pigments/filler, 10 to 50 % vehicle and > 0 to 20 %, preferably 5 to 20 %, coagulant.

10. An apparatus for carrying out the process according to any one of claims 1 to 9, characterised by a dissolver (2) for mixing the coagulated material with solvent by stirring, a sedimentation vessel (3) for separating into suspension liquid and residue, a filter unit (5) or centrifuge unit (7) for separating residual pigments/residual filler from the clarified suspension liquid, a vacuum evaporator (6) for concentrating the dissolved vehicle, a condenser (11) for converting the vapour of the vacuum evaporator (6) into condensate, a decanting device (13) for removing suspension liquid contained in the residue, and a vessel (12) for receiving and separating the condensate consisting of solvent and water and for separating the suspension liquid removed from the residue into solvent and water.

11. An apparatus for carrying out the process according to any one of claims 2 to 9, characterised by a vacuum drier (18) for drying the coagulated material, with a condenser (10) for converting the vapour into condensate, a vessel (12) for receiving and separating this condensate into solvent and water, a dissolver (2) for mixing the dry coagulated material with solvent by stirring, a sedimentation vessel (3) for separating into suspension liquid and residue, a filter unit (5) and/or centrifuge unit (7) for separating residual pigments/residual filler from the suspension liquid, a vacuum evaporator (6) for concentrating the dissolved vehicle, a condenser (11) for converting the vapour of the vacuum evaporator (6) into condensate, and a decanting device (13) for removing suspension liquid contained in the residue.

12. An apparatus according to claim 11, characterised in that the outlet of the condenser (11) connected to the vacuum evaporator (6) and the outlet of the decanting device (13) are connected to the vessel (12) receiving the solvent-water condensate.

13. An apparatus according to any one of claims 10 to 12, characterised by a drier (14), which is disposed downstream of the decanting device (13), for drying the residue, which drier is connected to a condenser (15) for converting the drier vapour into condensate and to a mill (16) for comminuting the dried residue.

14. An apparatus according to claim 13, characterised in that the outlet of the condenser (15) connected to the drier (14) is connected to the vessel (12) receiving the solvent-water condensate.

## Revendications

1. Procédé de traitement du coagulum, qui se forme lors de l'application de peintures au pistolet, qui renferme de l'eau, du solvant, des pigments/charge, du liant et de l'agent de coagulation et qui est délayé au solvant, caractérisé en ce qu'il consiste à séparer cette suspension en du liquide de suspension limpide, constitué essentiellement de solvant dissous et d'eau résiduelle, et en résidu, à filtrer et/ou à centrifuger le liquide de suspension, à le concentrer par évaporation sous vide, à transformer les buées ainsi créées et constituées de vapeur saturée du solvant et d'eau résiduelle, en condensat, à séparer la plus grande partie du liquide de suspension inclus dans le résidu, à séparer le condensat et le liquide de suspension, séparé du résidu, en du solvant et en eau et à retourner le solvant dans le circuit.

2. Procédé de traitement du coagulum, qui se forme lors de l'application de peintures au pistolet qui renferme de l'eau, du solvant, des pigments/charge, du liant et de l'agent de coagulation, caractérisé en ce qu'il consiste à sécher le coagulum, à transformer les buées, constituée de vapeur saturée du solvant et d'eau, en condensat et à séparer le condensat en du solvant et en eau, à délayer le coagulum séché au solvant, à séparer cette suspension en du liquide de suspension limpide, constitué essentiellement de liant dissous, et en résidu, à filtrer et/ou à centrifuger le liquide de suspension, à le concentrer par évaporation sous vide et à transformer les buées ainsi créées, constituées de vapeur d'eau saturée du solvant, en condensat, à séparer la plus grande partie du liquide de suspension inclus dans le résidu et à retourner le solvant dans le circuit.

3. Procédé suivant la revendication 1 ou 2, caractérisé en ce qu'il consiste à concentrer le liquide de suspension limpide à une température de 35 à 70°C sous un vide de 5 à 50 mbar, de préférence de 10 à 15 mbar.

4. Procédé suivant la revendication 1 ou 2, caractérisé en ce qu'il consiste après élimination du liquide de suspension, à sécher le résidu à une température de 80 à 200°C et à transformer les buées, constituées de vapeur saturée de solvant et d'eau ou uniquement de solvant, en condensat et à séparer le solvant-eau-condensat en solvant et en eau.

5. Procédé suivant la revendication 4, caractérisée ce que qu'il consiste à fragmenter le résidu séché, de préférence par broyage.

6. Procédé suivant la revendication 2, caractérisé en ce qu'il consiste à sécher le coagulum à une température de 35 à 70°C sous un vide de 5 à 50 mbar, de préférence 10 à 15 mbar.

7. Procédé suivant l'une des revendications 1 à 6, caractérisé en ce qu'il consite à mélanger au coagulum du solvant dans le rapport 1:0,5 à 1:5, de préférence 1:1 à 1:2.

8. Procédé suivant l'une des revendications 1 à 7, caractérisé en ce qu'il consiste à ajouter au coagulum du solvant usuel, de préférence des hydrocarbures aromatiques, des esters, de l'étheroxyde glycolique et des alcools, et ce individuellement ou à plusieurs en mélange.

9. Procédé suivant l'une des revendications 1 à 8, caractérisé par l'utilisation, pour le coagulum, de la composition 5 à 60 % d'eau, 5 à 10 % de solvant, 15 à 40 % de pigments/charge, 10 à 50 % de liant et > 0 à 20 %, de préférence 5 à 20 %, d'agent coagulant.

10. Dispositif pour la mise en oeuvre du procédé suivant l'une des revendications 1 à 9, caractérisé par un dispositif de dissolution (2) destiné à délayer du coagulum au solvant, un récipient de sédimentation (3) destiné à la séparation en un liquide de suspension et en un résidu, une unité de filtration (5) et/ou une unité de centrifugation (7) destinée à séparer des pigments résiduels/charge résiduelle, du liquide en suspension limpide, un évaporateur sous vide (6) destiné à concentrer le liant dissous, un condenseur (11) destiné à transformer la buée de l'évaporateur sous vide (6) en condensat, un dispositif de décantation (13) destiné à éliminer du liquide en suspension inclus dans le résidu, un récipient (12) destiné à recevoir et à séparer le condensat constitué par le solvant et d'eau, ainsi que le liquide de suspension éliminé du résidu, en solvant et en eau.

11. Dispositif pour la mise en oeuvre du procédé suivant l'une des revendications 2 à 9, caractérisé par un séchoir sous vide (18) pour faire sécher le coagulum et comportant un condenseur (10) pour transformer la buée en condensat, un récipient (12) pour recevoir et ce condensat le séparer en solvant et l'eau, un dispositif de dissolution (2) pour délayer le coagulum sec au solvant, un récipient de sédimentation (3) pour réaliser la séparation en liquide de séparation et en résidu, une unité de filtration (5) et/ou une unité de centrifugation (7) pour séparer des pigments résiduels/charge résiduelle du liquide de suspension, un évaporateur sous vide (6) pour concentrer le liant dissous, un condenseur (11) pour transformer la buée de l'évaporateur sous vide (6) en condensat et un dispositif de décantation (13) pour éliminer le liquide de suspension inclus dans le résidu.

12. Dispositif suivant la revendication 11, caractérisé en ce que la sortie du condenseur (11), qui communique avec l'évaporateur sous vide (6), et la sortie du dispositif de décantation (13) communique avec le récipient (12) qui reçoit le solvant-eau-condensat.

13. Dispositif suivant l'une des revendications 10 à 12, caractérisé par un séchoir (14) qui est disposé en aval du dispositif de décantation (13), qui est destiné à sécher le résidu et qui communique avec un condenseur (15) destiné à transformer la buée du séchoir en condensat, et un broyeur (16) destiné à fragmenter le résidu séché.

14. Dispositif suivant la revendication 13, caractérisé par le fait que la sortie du condenseur (15) communiquant avec le séchoir (14) communique avec le récipient (12) de réception du condensat solvant-eau-condensat.
